# EUROPÄISCHE PATENTSCHRIFT

(11) **EP 3 321 553 B1**
(45) Veröffentlichungstag und Bekanntmachung des Hinweises auf die Patenterteilung: **27.01.2021**
(21) Anmeldenummer: 17187172.6
(22) Anmeldetag: 22.08.2017
(51) Int. Cl.: F16L 53/37, B67D 7/82

(54) **BEHEIZBARER HOHLKÖRPER, INSBESONDERE BEHEIZBARER SCHLAUCH**
HEATABLE HOLLOW BODY, IN PARTICULAR HEATABLE TUBE
CORPS CREUX CHAUFFANT, EN PARTICULIER TUBE CHAUFFANT

(30) Priorität: 14.11.2016 DE 102016222240
(43) Veröffentlichungstag der Anmeldung: 16.05.2018
(73) Patentinhaber: ContiTech Schlauch GmbH, 30165 Hannover (DE)
(72) Erfinder: Sostmann, Stefan, 30855 Langenhagen (DE); Koppenrath, Tim, 34119 Kassel (DE); Onken, Kristian, 34131 Kassel (DE); Völxen, Thomas, 34128 Kassel (DE); Uhe, Jürgen, 34454 Bad Arolsen (DE)
(74) Vertreter: Finger, Karsten

(56) Entgegenhaltungen:
- EP-A1- 1 858 298
- US-A1- 2010 126 986
- US-A1- 2014 110 004

## Beschreibung

Die vorliegende Erfindung betrifft einen beheizbaren Hohlkörper, insbesondere einen beheizbaren Schlauch, gemäß dem Oberbegriff des Anspruchs 1.

Auf dem Gebiet der Hohlkörper zum Transport bzw. zur Speicherung von flüssigen, gasförmigen oder pastösen Medien sind verschiedene Anwendungen bekannt, bei denen die Hohlkörper elektrisch beheizbar sind. Hierdurch kann z.B. bei dem Transport bzw. bei der Speicherung des Mediums eine vorbestimmte Temperatur erreicht werden. Ferner kann dies insbesondere dann von Bedeutung sein, wenn Medien in dem Hohlkörper transportiert bzw. gespeichert werden sollen, bei denen die Gefahr besteht, dass sie während des Einsatzes einfrieren können und so einen Transport durch den Hohlkörper bzw. Abtransport aus dem Hohlkörper verhindert werden kann. Diese betrifft z.B. Schläuche zum Transport von Wasser bzw. wässrigen Medien. Auch für Anwendungen zum Transport bzw. zur Speicherung hochviskoser Medien wie z.B. Öle kann es sinnvoll sein, die Viskosität des Mediums durch Erwärmung zu verringern und damit den Transport des Mediums zu erleichtern.

Die WO 2015 074 776 A1 beschreibt einen elastomeren Schlauch mit einer elektrisch leitfähigen Innenschicht, die als elastomeres Widerstandselement zum Beheizen des Schlauchaufbaus genutzt werden kann. Dazu werden zwei Elektroden derart auf der Innenschicht angeordnet, dass die beiden Elektroden mit einem konstanten Abstand zueinander über die komplette Schlauchlänge nebeneinander auf der Innenschicht aufliegen und die Innenschicht mit Strom versorgen können. Hierdurch kann die Innenschicht mittels Strom-Wärme-Verlusten erwärmt werden und diese Wärme möglichst direkt an z.B. ein Fluid innerhalb des Schlauches abgeben.

Die leitfähige Innenschicht des Schlauches ist ausgebildet, bei Spannungen von z.B. 0 V bis ca. 100 V ausreichend Strom führen zu können, um Heizleistungen von 0 W/m bis ca. 30 W/m über die Länge des Schlauches zu erzeugen. Gleichzeitig ist die leitfähige Innenschicht des Schlauches ausgebildet, ihren Widerstand über den eingesetzten Temperaturbereich möglichst kaum bis gar nicht zu ändern, um mit einer konstanten Eingangsspannung arbeiten zu können und eine komplizierte Steuerelektronik zu vermeiden.

Nachteilig bei dem Schlauch der WO 2015 074 776 A1 ist jedoch, dass aus diesen Gründen das Maß der Erwärmung der elektrisch leitfähigen Innenschicht von der angelegten Eingangsspannung abhängt. Somit kann es zu einer ungewollten zu starken elektrischen Erwärmung der Innenschicht kommen, wenn eine zu große Eingangsspannung zugelassen wird

Die US 2010/126986 A1 beschreibt einen Schlauch, welcher eine innere beheizbare Schicht aufweist, welche als Kaltleiter ausgebildet ist und mit zwei elektrischen Leitern verbunden ist.

Eine Aufgabe der vorliegenden Erfindung ist es, einen beheizbaren Hohlkörper, insbesondere einen beheizbaren Schlauch, der eingangs beschriebenen Art bereit zu stellen, der vor Überhitzung durch eine zu große Eingangsspannung geschützt werden kann. Insbesondere soll der Schutz vor Überhitzung eine Eigenschaft des beheizbaren Hohlkörpers selbst sein. Dies soll möglichst einfach umgesetzt werden können. Zumindest soll eine Alternative zu bekannten derartigen beheizbaren Hohlkörpern geschaffen werden.

Die Aufgabe wird erfindungsgemäß durch einen beheizbaren Hohlkörper, insbesondere durch einen beheizbaren Schlauch, mit den Merkmalen gemäß Anspruch 1 gelöst. Vorteilhafte Weiterbildungen sind in den Unteransprüchen beschrieben.

Die vorliegende Erfindung betrifft somit einen beheizbaren Hohlkörper zum Transport und bzw. oder zur Speicherung flüssiger, gasförmiger und bzw. oder pastöser Medien mit wenigstens einer beheizbaren Schicht, die ein elektrisch leitfähiges Material aufweist. Der Hohlkörper weist ferner einen ersten elektrischen Leiter, der elektrisch leitfähig mit der beheizbaren Schicht verbunden ist, und einen zweiten elektrischen Leiter auf, der elektrisch leitfähig mit der beheizbaren Schicht verbunden ist. Ein derartiger beheizbarer Hohlkörper ist beispielsweise aus der WO 2015 074 776 A1 oder der US 2010/126986 A1 bekannt.

Erfindungsgemäß ist der beheizbare Hohlkörper dadurch gekennzeichnet, dass der erste elektrische Leiter und der zweite elektrische Leiter zumindest abschnittsweise, vorzugsweise vollständig, jeweils eine Ummantelung aufweisen, wobei wenigstens die Ummantelung eines der beiden elektrischen Leiter elektrisch leitfähig und als Kaltleiter ausgebildet ist. Diese Ummantelung ist derart ausgebildet, dass der Stromfluss von dem jeweiligen elektrischen Leiter durch dessen Ummantelung hindurch in die elektrisch leitfähige Schicht und umgekehrt stattfinden kann. Auf diese Weise kann die elektrische Erwärmung der elektrisch leitfähigen Schicht wie bisher beibehalten werden. Gleichzeitig kann die Ummantelung bzw. beide Ummantelungen mit ihren Eigenschaften in den Stromfluss eingebunden werden.

Dabei liegt der vorliegenden Erfindung die Erkenntnis zugrunde, dass Materialien bekannt sind, welche ihren elektrischen (ohmschen) Widerstand temperaturabhängig ändern können. Somit sind sog. Kaltleiter, PTC-Widerstände oder PTC-Thermistoren (englisch: Positive Temperature Coefficient) stromleitende Materialien, die bei tieferen Temperaturen den Strom besser leiten können als bei höheren Temperaturen. Ihr elektrischer Widerstand vergrößert sich bei steigender Temperatur.

Erfindungsgemäß wird somit wenigstens die Ummantelung eines der beiden elektrischen Leiter und vorzugsweise die Ummantelungen beider elektrischen Leiter als Kaltleiter ausgebildet. Auf diese Weise kann erreicht werden, dass bei steigender Temperatur der beheizbaren Schicht auch die Temperatur der Ummantelung bzw. der Ummantelungen steigt. Hierdurch vergrößert sich der elektrische Widerstand der Ummantelung bzw. der Ummantelungen, so dass der Stromfluss zwischen den beiden elektrischen Leitern über die beheizbare Schicht reduziert wird. Der reduzierte Stromfluss über die beheizbare Schicht führt auch zu einer reduzierten Erwärmung der beheizbaren Schicht, so dass dessen Temperatur nicht weiter ansteigt und sogar wieder sinken kann. Da sich der elektrische Widerstand der Ummantelung bzw. der Ummantelungen somit stets der Temperatur der beheizbaren Schicht und gleichzeitig den Stromfluss zwischen den beiden elektrischen Leitern über die beheizbare Schicht anpasst, kann auf diese Weise eine selbstregulierende elektrische Beheizung des beheizbaren Hohlkörpers geschaffen werden.

Als Material der Ummantelungen bzw. der Ummantelungen kann beispielsweise ein Material verwendet werden, welches aus der DE 77 37 676 U1 bekannt ist. Die DE 77 37 676 U1 beschreibt eine selbstregulierende elektrische Heizvorrichtung in Form von Heizbändern, die aus einem leitfähigen thermoplastischen Material bestehen, das zwischen zwei elektrischen Leitern eingebracht wird und dort als Widerstandselement durch Bestromen als Heizelement fungieren kann. Hier ist das thermoplastische Heizmaterial so konzipiert, dass es einen starken PTC-Effekt beinhaltet, d.h. der spezifische elektrische Widerstand erhöht sich stark mit steigender Temperatur. Das führt dazu, dass bei einer konstanten angelegten Spannungsversorgung die Heizleistung sich bei zunehmender Temperatur selber drosselt, das Material also "selbst-regulierend" wirkt.

Auch wenn aus der DE 77 37 676 U1 ein Material bekannt ist, welches als Kaltleiter wirken kann, kann dieses Material dennoch nicht als Material der beheizbaren Schicht der WO 2015 074 776 A1 angewendet werden, um auf diese Weise den beheizbaren Hohlkörper der WO 2015 074 776 A1 selbst-regulierend weiterzubilden. Der Grund ist, dass in elastomeren Bauteilen kein derart ausgeprägter PTC-Effekt wie in der DE 77 37 676 U1 beschreiben für eine Selbstregulierung realisiert werden kann. Dieser PTC-Effekt beruht bei den thermoplastischen Materialien nämlich auf einer definierten WärmeAusdehnung, die zu einem Trennen der leitfähigen Zusätze im Material führt und damit die elektrische Leitfähigkeit reversibel reduziert. Dies ist bei elastomeren Materialien in dieser Form nicht möglich, weshalb das Material der DE 77 37 676 U1 nicht als Material der beheizbaren Schicht der WO 2015 074 776 A1 angewendet werden kann.

Ferner hat das Material der DE 77 37 676 U1 die Eigenschaft, üblicherweise sehr steif zu sein, weshalb sich das Material der DE 77 37 676 U1 auch aus diesem Grund gar nicht zur Anwendung in einem, insbesondere elastischen, beheizbaren Hohlkörper eignet sowie sich nicht in das elastomere Material der beheizbaren Schicht der WO 2015 074 776 A1 integrieren lässt.

Daher beruht die vorliegende Erfindung auf der Erkenntnis, einen beheizbaren Hohlkörper wie z.B. der WO 2015 074 776 A1 mit einem Material wie z.B. der DE 77 37 676 U1 derart zu kombinieren, dass das Material der DE 77 37 676 U1 nicht als oder in der beheizbaren Schicht sondern als Ummantelung bzw. als Ummantelungen der elektrischen Leiter angewendet wird. Umspritzt man z.B. die in den beheizbaren Hohlkörper eingebrachten elektrischen Leiter mit einem Material, welches als Kaltleiter wirken kann, bevor man die ummantelten elektrischen Leiter auf die beheizbare Schicht aufbringt, so kann ein beheizbarer Hohlkörper geschaffen werden, welche die Eigenschaften des beheizbaren Hohlkörpers der WO 2015 074 776 A1 um eine thermische Selbstregulierung erweitern kann. Das Material der beheizbaren Schicht kann unverändert und z.B. insbesondere elastisch bleiben, was insbesondere für die Anwendung der Erfindung bei einem Schlauch vorteilhaft sein kann. Gleichzeitig kann die selbstregulierende Ummantelung eines elektrischen Leiters als Strombegrenzer bei erhöhten Temperaturen wirken.

Über die elektrischen Leiter kann die beheizbare Schicht mit einer Spannungsquelle verbunden werden, um ihr die elektrische Heizleistung zuzuführen. Dieses Elektrodenmaterial kann vorzugsweise hinsichtlich der Bestandteile der beheizbaren Schicht, z.B. dessen Gummi- oder Kunststoffbestandteilen, sowie gegenüber dem Herstellungsprozess des beheizbaren Hohlkörpers stabil sein. Hierzu können z.B. metallische Elektroden z.B. aus Kupfer verwendet werden. Vorteilhaft ist hierbei, dass metallische Elektroden günstig verfügbar und einfach zu verarbeiten sind. Ferner sind metallische Elektroden nicht so empfindlich gegenüber kleineren Materialveränderungen im Gegensatz zu ihrer Verwendung als Heizleiter. So ist Korrosion in kleinerem Umfang nicht bedeutend für die Funktionstüchtigkeit eines elektrischen Leiters als Elektrode im Gegensatz zu seinem Einsatz als Heizleiter (Widerstandsleiter). Deswegen müssen die Elektroden an sich auch nicht extra ummantelt und geschützt werden, was die Herstellung vereinfachen und günstiger gestalten kann. Auch darf erfindungsgemäß gar keine elektrisch isolierende Ummantelung um die elektrischen Leiter vorgesehen sein, zumindest nicht an den Stellen, an denen sie mit der beheizbaren Schicht einen elektrisch leitfähigen Kontakt aufweisen sollen, weil dieser durch die elektrisch isolierende Ummantelung unterbunden wäre. Somit kann die erfindungsgemäße Kaltleiter-Ummantelung direkt auf die blanke Oberfläche der elektrischen Leiter aufgebracht werden.

Vorzugsweise weist das elektrisch leitfähige Material der beheizbaren Schicht sowohl einen derart großen elektrischen Widerstand, dass es die beheizbare Schicht als Widerstandsleiter beheizen kann, als auch einen derart geringen elektrischen Widerstand auf, dass die beheizbare Schicht gleichzeitig elektrisch leitfähig ist. Diese Balance zwischen elektrischer Leitfähigkeit und elektrischem Widerstand kann über den spezifischen Widerstand des Materials der beheizbaren Schicht durch die Wahl der entsprechenden Bestandteile bzw. deren Anteile an der Zusammensetzung des Materials eingestellt werden. Hierbei muss bei ausreichender elektrischer Verlustleistung in der beheizbaren Schicht ein Fluss des elektrischen Stromes durch das elektrisch leitfähige Material gegeben sein.

Gemäß einem Aspekt der vorliegenden Erfindung weist die Ummantelung bzw. weisen die Ummantelungen ein thermoplastisches Material auf, insbesondere bestehen aus einem thermoplastischen Material. Dieses thermoplastische Material kann das Material wie in der DE 77 37 676 U1 beschrieben sein. Hierdurch können die dort beschriebenen Vorteile bei der vorliegenden Erfindung genutzt werden.

Gemäß einem weiteren Aspekt der vorliegenden Erfindung ist die Ummantelung bzw. sind die Ummantelungen ausgebildet, bei einer ersten Temperatur, insbesondere bei einer Umgebungstemperatur, einen elektrischen Widerstand aufzuweisen, welcher geringer als der elektrische Widerstand des ersten elektrischen Leiters oder des zweiten elektrischen Leiters ist. Auf diese Weise kann erreicht werden, dass zu Beginn eines elektrischen Erwärmungsprozesses, der z.B. bei einer Umgebungstemperatur des beheizbaren Hohlkörpers beginnen kann, die Ummantelung eines elektrischen Leiters einen geringeren elektrischen Widerstand als der des elektrischen Leiters aufweist, so dass möglichst die komplette elektrische Leistung für die Erwärmung der beheizbaren Schicht verwendet werden kann. Dies kann zu einer effizienten und anfänglich schnellen elektrischen Erwärmung des beheizbaren Hohlkörpers führen. Dies kann insbesondere dadurch erreicht werden, indem die Ummantelung bzw. die Ummantelungen bei einer ersten Temperatur, insbesondere bei einer Umgebungstemperatur, einen elektrischen Widerstand aufzuweisen, welcher sehr viel geringer als der elektrische Widerstand des ersten elektrischen Leiters oder des zweiten elektrischen Leiters ist.

Gemäß einem weiteren Aspekt der vorliegenden Patentanmeldung ist die Ummantelung bzw. sind die Ummantelungen ausgebildet, bei einer zweiten Temperatur, insbesondere bei einer unzulässig hohen Temperatur, einen elektrischen Widerstand aufzuweisen, welcher größer als der elektrische Widerstand des ersten elektrischen Leiters oder des zweiten elektrischen Leiters ist. Hierdurch kann erreicht und durch die Eigenschaften des Materials der Ummantelung bzw. der Ummantelungen vorgegeben werden, dass bis zu einem vorbestimmten Maß eine Erwärmung zugelassen werden kann. Auf diese Weise kann eine unzulässige Erwärmung vermieden werden, welche zu einer Beschädigung oder Zerstörung des beheizbaren Hohlkörpers führen könnte. Dies gilt ebenso für ein Medium, welches innerhalb des beheizbaren Hohlkörpers vorhanden sein kann. Dies kann insbesondere dadurch erreicht werden, indem die Ummantelung bzw. die Ummantelungen bei einer zweiten Temperatur, insbesondere bei einer unzulässig hohen Temperatur, einen elektrischen Widerstand aufzuweisen, welcher sehr viel größer als der elektrische Widerstand des ersten elektrischen Leiters oder des zweiten elektrischen Leiters ist.

Gemäß einem weiteren Aspekt der vorliegenden Erfindung weisen der erste elektrische Leiter und der zweite elektrische Leiter einen geringeren elektrischen Widerstand als die beheizbare Schicht auf. Die elektrischen Leiter dienen somit nicht selbst als Heizleiter (Heizwiderstände, Widerstandsleiter) sondern als Elektroden und weisen daher eine möglichst hohe elektrische Leitfähigkeit auf, um den elektrischen Strom möglichst verlustfrei dem elektrisch leitfähigen Material der beheizbaren Schicht zuzuführen, d.h. möglichst viel Spannung über dem elektrisch leitfähigen Material der beheizbaren Schicht abfallen zu lassen. Die Elektroden weisen daher ein gut leitfähiges Material auf bzw. bestehen aus diesem.

Gemäß einem weiteren Aspekt der vorliegenden Erfindung steht die beheizbare Schicht zumindest teilweise, vorzugsweise weitestgehend, besonders bevorzugt vollständig, in direktem Kontakt mit dem zu beheizenden Medium. Vorteilhaft ist hierbei, dass ein Teil der beheizbaren Schicht oder sogar große Teile der beheizbaren Schicht bis hin zur vollständigen beheizbaren Schicht anstelle der bisher üblichen linienförmigen Heizdrähte zur Erwärmung des Mediums verwendet werden können, um eine möglichst flächige und gleichmäßige Wärmeerzeugung und Ausbreitung zu erreichen. Gleichzeitig kann die beheizbare Schicht in direkten Kontakt mit dem zu beheizenden Medium gebracht werden. Hierdurch kann die Wärme schneller, gleichmäßiger und verlustfreier an das Medium abgegeben werden, wodurch die Beheizung einfacher und direkter eingestellt bzw. geregelt sowie elektrische Energie eingespart werden kann.

Gemäß einem weiteren Aspekt der vorliegenden Erfindung weist der beheizbare Hohlkörper eine innere Schicht auf, welche zumindest teilweise, vorzugsweise weitestgehend, besonders bevorzugt vollständig, in direktem Kontakt mit dem zu beheizenden Medium steht, wobei die innere Schicht als Sperrschicht ausgebildet ist. Auf diese Weise kann mit der inneren Schicht als Sperrschicht das Eindringen des zu fördernden Mediums in die Wandung des beheizbaren Hohlkörpers vermieden werden. Beispielsweise kann verhindert werden, dass Harnstoff in die Wandung eindringen kann. Hierzu kann die Sperrschicht vorzugsweise aus einem thermoplastischen Material wie insbesondere Polyethylen oder Polyamid ausgebildet sein.

Gemäß einem weiteren Aspekt der vorliegenden Erfindung weist die beheizbare Schicht ein elastomeres Material oder ein Kunststoffmaterial auf, in welches das elektrisch leitfähige Material eingebettet ist. Auf diese Weise kann der beheizbare Hohlkörper z.B. als Schlauch aus einem Elastomermaterial wie z.B. Gummi ausgebildet sein, um ihn z.B. flexibel, biegsam und bzw. oder dehnbar zu gestalten, oder aus Kunststoff z.B. als Medientank mit geringem Gewicht. Die elektrische Leitfähigkeit bei gleichzeitiger Erzeugung elektrischer Wärmeverluste kann über entsprechende Beigaben von elektrischen leitfähigen Bestandteilen in das Gummi- bzw. Kunststoffmaterial erfolgen.

Gemäß einem weiteren Aspekt der Erfindung ist das elektrisch leitfähige Material ein Leitruß, ein Metallpulver, Graphit, Kohlefasern oder Carbon-Nanotubes oder weist dies auf. Derartige Bestandteile lassen sich einfach und sicher verarbeiten und dosieren, um sicher die gewünschte elektrische Leitfähigkeit bei gleichzeitig gewünschtem elektrischem Widerstand zu erzielen. Bei beheizbaren Schichten aus Gummi sind im Prinzip alle leitfähig ausgerüsteten Elastomermischungen denkbar. Als besonders vorteilhaft haben sich jedoch rußgefüllte Elastomermischungen herausgestellt, da diese bei der Leitung des elektrischen Stroms eine vergleichsweise hohe Wärmeverlustleistung aufweisen und auf einen geeigneten materialintrinsischen, d. h. spezifischen Widerstand, eingestellt werden können.

Gemäß einem weiteren Aspekt der vorliegenden Erfindung ist bzw. sind der erste elektrische Leiter und bzw. oder der zweite elektrische Leiter in eine Festigkeitsträgerschicht eingebettet. Hierdurch kann dem elektrischen Leiter bzw. den elektrischen Leitern eine höhere Stabilität verliehen werden. Ferner kann der elektrische Leiter bzw. können die elektrischen Leiter bei der Aufbringung der Festigkeitsträgerschicht mitaufgebracht werden, was die Herstellung vereinfachen kann. Insbesondere kann der elektrische Leiter bzw. können die elektrischen Leiter als Bestandteil der Festigkeitsträgerschicht z.B. durch Wickeln oder Weben mitaufgebracht werden.

Gemäß einem weiteren Aspekt der Erfindung ist der beheizbare Hohlkörper ein beheizbarer Schlauch und der erste elektrische Leiter und der zweite elektrische Leiter sind wendelförmig mit konstantem Abstand zueinander in Umfangsrichtung auf der dem zu beheizenden Medium abgewandten Seite der beheizbaren Schicht angeordnet. Dies kann zum einen den Vorteil haben, dass die Elektroden durch die beheizbare Schicht gegenüber dem Medium sowohl mechanisch als auch chemisch geschützt werden können. Ferner können die Elektroden auf die beheizbare Schicht von außen aufgebracht werden, was die Herstellung vereinfachen kann. Auch können die Elektroden in mögliche weitere äußere Schichten des Schlauches eingebunden bzw. durch diese fixiert und geschützt werden.

Zwei Ausführungsbeispiele und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen beheizbaren Hohlkörpers gemäß eines ersten Ausführungsbeispiels in Form eines beheizbaren Schlauches, dargestellt ohne äußere Schicht;
- Fig. 2: einen schematischen Querschnitt durch den beheizbaren Schlauch der Fig. 1, dargestellt mit äußerer Schicht;
- Fig. 3: eine perspektivische schematische Darstellung eines erfindungsgemäßen beheizbaren Hohlkörpers gemäß eines zweiten Ausführungsbeispiels in Form eines beheizbaren Schlauches, dargestellt ohne äußere Schicht; und
- Fig. 4: einen schematischen Querschnitt durch den beheizbaren Schlauch der Fig. 3, dargestellt mit äußerer Schicht.

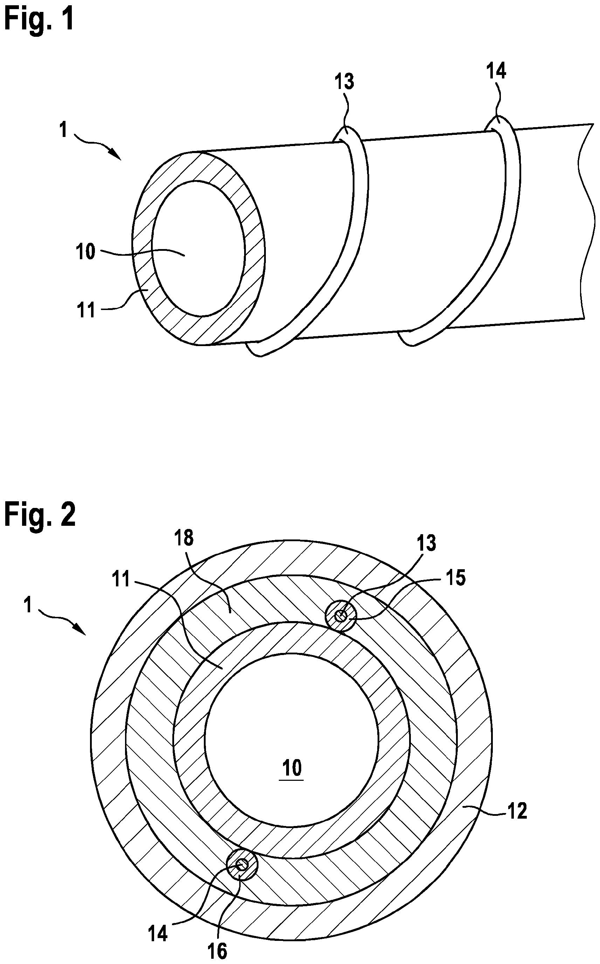

In einem ersten Ausführungsbeispiel gemäß der Fig. 1 und 2 wird als beheizbarer Hohlkörper 1 ein beheizbarer Schlauch 1 betrachtet. Der beheizbare Schlauch 1 weist eine innere Schicht 11 auf, welche einen Innenraum 10 bzw. Hohlraum 11 umgibt. In dem Hohlraum 10 kann ein Medium geführt werden. Die innere Schicht 11 selbst ist als beheizbare Schicht 11 ausgebildet. Um die beheizbare Schicht 11 herum sind ein erster elektrischer Leiter 13 als erste Elektrode 13 und ein zweiter elektrischer Leiter 14 als zweite Elektrode 14 wendelförmig mit konstantem Abstand zueinander in Umfangsrichtung angeordnet.

Dabei weisen beide Elektroden 13, 14 jeweils eine Ummantelung 15, 16 aus einem thermoplastischen Material auf. Die Ummantelungen 15, 16 sind elektrisch leitfähig und als Kaltleiter ausgebildet. Die Ummantelungen 15, 16 umgeben die jeweilige Elektrode 13, 14 in Umfangsrichtung vollständig und in der Länge zumindest in dem Maße, auf welchem die Elektroden 13, 14 auf der beheizbaren Schicht 11 angeordnet sind. Die Ummantelungen 15, 16 sind in eine Festigkeitsträgerschicht 18 eingebettet. Die Festigkeitsträgerschicht 18 wird von einer äußeren Schicht 12 umgeben, welche ein elastomeres und elektrisch nicht-leitfähiges Material aufweist. Die äußere Schicht 12 dient der elektrischen Isolation sowie dem Schutz der Ummantelungen 15, 16, der Festigkeitsträgerschicht 18 sowie der beheizbaren Schicht 11.

Dabei stellen die Ummantelungen 15, 16 jeweils einen zumindest teilweise flächigen Kontakt zwischen der jeweiligen Elektrode 13, 14 und der äußeren Oberfläche der beheizbaren Schicht 11 her, so dass ein elektrischer Strom von z.B. der ersten Elektrode 13 über dessen Ummantelung 15 in die beheizbare Schicht 11 fließen kann, um diese elektrisch zu erwärmen. Von der beheizbaren Schicht 11 kann der Strom wieder über die Ummantelung 16 und die zweite Elektrode 14 abfließen.

Da die beiden Ummantelungen 15, 16 als Kaltleiter ausgebildet sind, kann erfindungsgemäß erreicht werden, dass bei steigender Temperatur der beheizbaren Schicht 11 auch die Temperatur der Ummantelungen 15, 16 steigt. Hierdurch vergrößert sich der elektrische Widerstand der Ummantelungen 15, 16, so dass der Stromfluss zwischen den beiden Elektroden 13, 14 über die beheizbare Schicht 11 reduziert wird. Der reduzierte Stromfluss über die beheizbare Schicht 11 führt auch zu einer reduzierten Erwärmung der beheizbaren Schicht 11, so dass dessen Temperatur nicht weiter ansteigt und sogar wieder sinken kann.

Da sich der elektrische Widerstand der Ummantelungen 15, 16 somit stets der Temperatur der beheizbaren Schicht 11 und gleichzeitig den Stromfluss zwischen den beiden Elektroden 13, 14 über die beheizbare Schicht 11 anpasst, kann auf diese Weise eine selbstregulierende elektrische Beheizung des beheizbaren Schlauches 1 geschaffen werden.

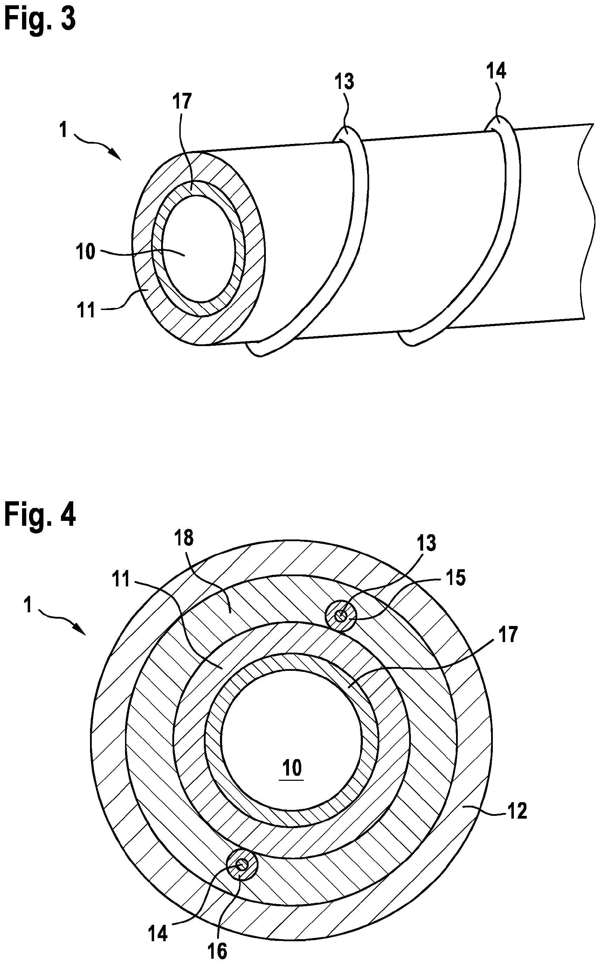

In einem zweiten Ausführungsbeispiel gemäß der Fig. 3 und 4 wird als beheizbarer Hohlkörper 1 ein beheizbarer Schlauch 1 betrachtet, welcher sich dadurch von dem beheizbaren Schlauch 1 des ersten Ausführungsbeispiels unterscheidet, dass in diesem zweiten Ausführungsbeispiel zwischen der beheizbaren Schicht 11 und dem Innenraum 10 eine innere Schicht 17 in Form einer Sperrschicht 17 aus einem thermoplastischen Material wie insbesondere Polyethylen oder Polyamid angeordnet ist. Die Sperrschicht 17 soll verhindern, dass ein Medium wie z.B. ein Harnstoff aus dem Innenraum 10 in die Wandung 11, 18, 12 des beheizbaren Schlauches 1 eindringen kann.

### Bezugszeichenliste (Teil der Beschreibung)

- 1: Beheizbarer Hohlkörper; beheizbarer Schlauch
- 10: Innenraum, Hohlraum des beheizbaren Hohlkörpers 1
- 11: beheizbare Schicht des beheizbaren Hohlkörpers 1
- 12: äußere Schicht des beheizbaren Hohlkörpers 1
- 13: erster elektrischer Leiter, erste Elektrode
- 14: zweiter elektrischer Leiter, zweite Elektrode
- 15: Ummantelung des ersten elektrischen Leiters 13
- 16: Ummantelung des zweiten elektrischen Leiters 14
- 17: innere Schicht, Sperrschicht
- 18: Festigkeitsträgerschicht

## Patentansprüche

1. Beheizbarer Hohlkörper (1) zum Transport und/oder zur Speicherung flüssiger, gasförmiger und/oder pastöser Medien, mit
wenigstens einer beheizbaren Schicht (11), die ein elektrisch leitfähiges Material aufweist,
einem ersten elektrischen Leiter (13), der elektrisch leitfähig mit der beheizbaren Schicht (11) verbunden ist, und
einem zweiten elektrischen Leiter (14), der elektrisch leitfähig mit der beheizbaren Schicht (11) verbunden ist, wobei
der erste elektrische Leiter (13) und der zweite elektrische Leiter (14) zumindest abschnittsweise jeweils eine Ummantelung (15, 16)
aufweisen, wobei wenigstens die Ummantelung (15, 16) eines der beiden elektrischen Leiter (13, 14) elektrisch leitfähig und als Kaltleiter ausgebildet ist
**dadurch gekennzeichnet, dass** der Stromfluss von dem jeweiligen elektrischen Leiter (13, 14) durch dessen Ummantelung (15, 16) hindurch in die elektrisch leitfähige Schicht (11) und umgekehrt stattfinden kann.

2. Beheizbarer Hohlkörper (1) nach Anspruch 1, **dadurch gekennzeichnet, dass** die Ummantelung(en) (15, 16) ein thermoplastisches Material aufweisen, insbesondere aus einem thermoplastischen Material bestehen.

3. Beheizbarer Hohlkörper (1) nach Anspruch 1 oder 2, **dadurch gekennzeichnet, dass** die Ummantelung(en) (15, 16) ausgebildet ist/sind, bei einer ersten Temperatur, insbesondere bei einer Umgebungstemperatur, einen elektrischen Widerstand aufzuweisen, welcher geringer als der elektrische Widerstand des ersten elektrischen Leiters (13) oder des zweiten elektrischen Leiters (14) ist.

4. Beheizbarer Hohlkörper (1) nach einem der vorherigen Ansprüche, **dadurch gekennzeichnet, dass**
die Ummantelung(en) (15, 16) ausgebildet ist/sind, bei einer zweiten Temperatur, insbesondere bei einer unzulässig hohen Temperatur, einen elektrischen Widerstand aufzuweisen, welcher größer als der elektrische Widerstand des ersten elektrischen Leiters (13) oder des zweiten elektrischen Leiters (14) ist.

5. Beheizbarer Hohlkörper (1) nach einem der vorherigen Ansprüche, **dadurch gekennzeichnet, dass**
wobei der erste elektrische Leiter (13) und der zweite elektrische Leiter (14) einen geringeren elektrischen Widerstand als die beheizbare Schicht (11) aufweisen.

6. Beheizbarer Hohlkörper (1) nach einem der vorherigen Ansprüche, **dadurch gekennzeichnet, dass**
wobei die beheizbare Schicht (11) zumindest teilweise, vorzugsweise weitestgehend, besonders bevorzugt vollständig, in direktem Kontakt mit dem zu beheizenden Medium steht.

7. Beheizbarer Hohlkörper (1) nach einem der Ansprüche 1 bis 5, **gekennzeichnet durch**
eine innere Schicht (17), welche zumindest teilweise, vorzugsweise weitestgehend, besonders bevorzugt vollständig, in direktem Kontakt mit dem zu beheizenden Medium steht,
wobei die innere Schicht (17) als Sperrschicht (17) ausgebildet ist.

8. Beheizbarer Hohlkörper (1) nach einem der vorherigen Ansprüche, **dadurch gekennzeichnet, dass**
die beheizbare Schicht (11) ein elastomeres Material oder ein Kunststoffmaterial aufweist, in welches das elektrisch leitfähige Material eingebettet ist.

9. Beheizbarer Hohlkörper (1) nach einem der vorherigen Ansprüche, **dadurch gekennzeichnet, dass**
das elektrische leitfähige Material ein Leitruß, ein Metallpulver, Graphit, Kohlefasern oder Carbon-Nanotubes ist oder dies aufweist.

10. Beheizbarer Hohlkörper (1) nach einem der vorherigen Ansprüche, **dadurch gekennzeichnet, dass**
der erste elektrische Leiter (13) und/oder der zweite elektrische Leiter (14) in eine Festigkeitsträgerschicht (18) eingebettet ist/sind.

11. Beheizbarer Hohlkörper (1) nach einem der vorherigen Ansprüche, **dadurch gekennzeichnet, dass**
der beheizbare Hohlkörper (1) ein beheizbarer Schlauch (1) ist, und
der erste elektrische Leiter (13) und der zweite elektrische Leiter (14) wendelförmig mit konstantem Abstand zueinander in Umfangsrichtung auf der dem zu beheizenden Medium abgewandten Seite der beheizbaren Schicht (11) angeordnet sind.

## Claims

1. Heatable hollow body (1) for transporting and/or for storing liquid, gaseous and/or pasty media, comprising at least one heatable layer (11) which comprises an electrically conductive material,
a first electrical conductor (13) which is electrically conductively connected to the heatable layer (11), and
a second electrical conductor (14) which is electrically conductively connected to the heatable layer (11), wherein
the first electrical conductor (13) and the second electrical conductor (14) each have a sheathing (15, 16) at least in sections, wherein at least the sheathing (15, 16) of one of the two electrical conductors (13, 14) is electrically conductive and designed as a PTC thermistor, **characterized in that** the current flow can take place from the respective electrical conductor (13, 14), through the sheathing (15, 16) of said electrical conductor, into the electrically conductive layer (11), and vice versa.

2. Heatable hollow body (1) according to Claim 1, **characterized in that**
the sheathing(s) (15, 16) comprises/comprise a thermoplastic material, in particular consists/consist of a thermoplastic material.

3. Heatable hollow body (1) according to Claim 1 or 2, **characterized in that**
the sheathing (s) (15, 16) is/are designed to have an electrical resistance which is lower than the electrical resistance of the first electrical conductor (13) or of the second electrical conductor (14) at a first temperature, in particular at an ambient temperature.

4. Heatable hollow body (1) according to one of the preceding claims, **characterized in that**
the sheathing (s) (15, 16) is/are designed to have an electrical resistance which is greater than the electrical resistance of the first electrical conductor (13) or of the second electrical conductor (14) at a second temperature, in particular at an impermissibly high temperature.

5. Heatable hollow body (1) according to one of the preceding claims, **characterized in that**
wherein the first electrical conductor (13) and the second electrical conductor (14) have a lower electrical resistance than the heatable layer (11).

6. Heatable hollow body (1) according to one of the preceding claims, **characterized in that**
wherein the heatable layer (11) is in at least partial, preferably predominant, particularly preferably complete, direct contact with the medium to be heated.

7. Heatable hollow body (1) according to one of Claims 1 to 5, **characterized by**
an inner layer (17) which is in at least partial, preferably predominant, particularly preferably complete, direct contact with the medium to be heated, wherein the inner layer (17) is designed as a barrier layer (17).

8. Heatable hollow body (1) according to one of the preceding claims, **characterized in that**
the heatable layer (11) comprises an elastomeric material or a plastic material into which the electrically conductive material is embedded.

9. Heatable hollow body (1) according to one of the preceding claims, **characterized in that**
the electrically conductive material is or comprises a conductive carbon black, a metal powder, graphite, carbon fibres or carbon nanotubes.

10. Heatable hollow body (1) according to one of the preceding claims, **characterized in that**
the first electrical conductor (13) and/or the second electrical conductor (14) are/is embedded into a strengthening member layer (18).

11. Heatable hollow body (1) according to one of the preceding claims, **characterized in that**
the heatable hollow body (1) is a heatable hose (1), and the first electrical conductor (13) and the second electrical conductor (14) are arranged on that side of the heatable layer (11) which is averted from the medium to be heated in a helical manner at a constant distance from one another in the circumferential direction.

## Revendications

1. Corps creux chauffable (1) destiné au transport et/ou au stockage de milieux liquides, gazeux et/ou pâteux, ledit corps comprenant
au moins une couche chauffable (11) qui comporte un matériau électriquement conducteur,
un premier conducteur électrique (13) qui est relié électriquement à la couche chauffable (11), et
un deuxième conducteur électrique (14) qui est relié électriquement à la couche chauffable (11),
le premier conducteur électrique (13) et le deuxième conducteur électrique (14) comportant chacun au moins par portions une gaine (15, 16), au moins la gaine (15, 16) de l'un des deux conducteurs électriques (13, 14) étant électriquement conductrice et étant conçue comme une résistance PTC (coefficient de température positif),
**caractérisé en ce que** le courant peut passer du conducteur électrique respectif (13, 14) à travers la gaine (15, 16) de celui-ci jusque dans la couche électriquement conductrice (11) et inversement.

2. Corps creux chauffable (1) selon la revendication 1, **caractérisé en ce que**
la ou les gaines (15, 16) comportent une matière thermoplastique, notamment sont en matière thermoplastique.

3. Corps creux chauffable (1) selon la revendication 1 ou 2, **caractérisé en ce que**
la ou les gaines (15, 16) sont conçues pour présenter, à une première température, notamment à une température ambiante, une résistance électrique qui est inférieure à la résistance électrique du premier conducteur électrique (13) ou du deuxième conducteur électrique (14) .

4. Corps creux chauffable (1) selon l'une des revendications précédentes, **caractérisé en ce que**
la ou les gaines (15, 16) sont conçues pour présenter, à une deuxième température, en particulier à une température élevée de manière inadmissible, une résistance électrique qui est supérieure à la résistance électrique du premier conducteur électrique (13) ou du deuxième conducteur électrique (14).

5. Corps creux chauffable (1) selon l'une des revendications précédentes, **caractérisé en ce que**
le premier conducteur électrique (13) et le deuxième conducteur électrique (14) ayant une résistance électrique inférieure à celle de la couche chauffable (11) .

6. Corps creux chauffable (1) selon l'une des revendications précédentes, **caractérisé en ce que**
la couche chauffable (11) étant au moins partiellement, de préférence dans une large mesure, de manière particulièrement préférée complètement, en contact direct avec le milieu à chauffer.

7. Corps creux chauffable (1) selon l'une des revendications 1 à 5, **caractérisé par**
une couche intérieure (17) qui est au moins partiellement, de préférence dans une large mesure, de manière particulièrement préférée complètement, en contact direct avec le milieu à chauffer,
la couche intérieure (17) étant conçue comme une couche barrière (17).

8. Corps creux chauffable (1) selon l'une des revendications précédentes, **caractérisé en ce que**
la couche chauffable (11) comprend un matériau élastomère ou un matériau synthétique dans lequel le matériau électriquement conducteur est incorporé.

9. Corps creux chauffable (1) selon l'une des revendications précédentes, **caractérisé en ce que**
le matériau électriquement conducteur est un noir de carbone, une poudre métallique, du graphite, des fibres de carbone ou des nanotubes de carbone ou en comporte.

10. Corps creux chauffable (1) selon l'une des revendications précédentes, **caractérisé en ce que**
le premier conducteur électrique (13) et/ou le deuxième conducteur électrique (14) sont incorporés dans une couche de renforcement (18).

11. Corps creux chauffable (1) selon l'une des revendications précédentes, **caractérisé en ce que**
le corps creux chauffable (1) est un tuyau chauffable (1), et le premier conducteur électrique (13) et le deuxième conducteur électrique (14) sont disposés hélicoïdalement à une distance constante l'un de l'autre dans la direction circonférentielle du côté de la couche chauffable (11) qui est opposé au milieu à chauffer.
